# EUROPÄISCHE PATENTANMELDUNG

(11) **EP 1 467 306 A2**
(43) Veröffentlichungstag der Anmeldung: **13.10.2004**
(21) Anmeldenummer: 03026667.0
(22) Anmeldetag: 19.11.2003
(51) Int. Cl.: G06K 7/10

(54) **Vorrichtung und Verfahren zum Erkennen von Identifikationsmerkmalen**

(30) Priorität: 20.11.2002 DE 10254248
(71) Anmelder: QUISS GMBH, 82178 PUCHHEIM (DE)
(72) Erfinder: Raab, Roman, 81827 München (DE); Tomtschko, Andreas, 82223 Eichenau (DE); Gruber, Bernhard, 82131 Stockdorf (DE)
(74) Vertreter: Kunz, Herbert, Dr.

(57) **Zusammenfassung**

Es wir eine Vorrichtung zum Erkennen eines Identifikationsmerkmals sowie ein entsprechendes Verfahren beschrieben, wobei die Vorrichtung zumindest ein Beleuchtungsmodul (1), eine Sensoreinheit und eine Auswerteeinheit aufweist. Zum Erkennen eines Identifikationsmerkmals bzw. eines Kodierungsmerkmals weist die Auswerteeinheit ein Erkennungsmittel auf, welches die mit der Sensoreinheit registrierte Darstellung des Identifikationsmerkmals rotationsunabhängig durch Bestrahlen des Identifikationsmerkmals mit Licht erfasst.

## Beschreibung

Die vorliegende Erfindung betrifft eine Vorrichtung zum Erkennen eines Identifikationsmerkmals gemäß dem Oberbegriff des Anspruchs 1 sowie ein geeignetes Verfahren hierzu.

Herkömmliche Vorrichtungen bzw. Verfahren dienen beispielsweise bei sogenannten Rücknahmeautomaten zum Sammeln und Sortieren von Produkten, die in einem geschlossenen Kreislauf verwendet werden sollen. Nachteilig an diesem bekannten System ist jedoch, dass das Produkt bzw. Material aus sogenannten pfandsystemfremden Kreisläufen angenommen wird, da derzeit nicht geprüft wird, aus welchem Materialkreislaufsystem das zurückzunehmende Produkt stammt.

Aus der DE 101 38 438 ist eine Vorrichtung zum Sortieren und/oder Sammeln von Materialien entnehmbar, bei der die Identifikation des Materials bzw. Produktes mittels eines Barcodes durchgeführt wird, der sich teilweise auf der Seite des zurückzunehmenden Materials befindet. Nachteilig hieran ist jedoch, dass der Barcode einfach vervielfältigt werden kann, so dass Materialien, auf die ein kopierter Barcode aufgebracht wird, und somit nicht pfandberechtigt sind, nicht mehr von dem pfandberechtigten Materialien zu unterscheiden sind. Aus der DE 101 38 438 ist ebenso entnehmbar, dass diese bekannte Vorrichtung zum Sammeln und Sortieren mit sogenannten Schwenkklappen ausgebildet sind, die einen Eingaberaum für das Produkt definieren, um den zu lesenden Barcode gegenüber den Sensoreinheiten positionsgenau auszurichten.

Aus der DE 101 38 438 ist ferner bekannt, dass die Rückverfolgung auf den Abfüller bzw. Hersteller der Verpackung des Materials bzw. Produktes mittels eines Barcodes erfolgt, der zusammen mit dem Dekor auf die Aussenseite gedruckt wird, d.h. auf die Dosenwand bzw. auf das Aussenetikett. Nachträglich wird gemäß der bekannten Lehre eine zusätzliche einfache Markierung zum Pfandschutz aufgebracht. Nachteilig hieran ist, dass die vorhandenen Barcodes durch beispielsweise Beschädigungen der D osenwand oder durch Ablösen des E tiketts n icht m ehr I esbar s ind, u nd e ine Pfandrückzahlung nicht mehr möglich ist, auch wenn der Barcode korrekt erkannt wurde.

Die Aufgabe der vorliegenden Erfindung ist es somit, die herkömmliche Vorrichtung bzw. das herkömmliche Verfahren so weiterzubilden, dass es auf einfache Weise ermöglicht wird, ausschließlich Material bzw. Produkte zurückzunehmen, das bzw. die aus einem pfandberechtigten Material- bzw. Pfandkreislauf stammt.

Gelöst wird diese Aufgabe vorrichtungstechnisch mit den Merkmalen des Anspruchs 1 und verfahrenstechnisch mit dem Merkmalen des Anspruchs 11.

Anmeldungsgemäß wird eine Auswerteinheit mit einem Erkennungsmittel bereitgestellt, das die mit der Sensoreinheit registrierte Darstellung des Identifikationsmerkmals rotationsunabhängig erfasst wird.

Mit dieser Maßnahme wird erreicht, dass eine positionsgenaue Ausrichtung des Barcodes nicht mehr notwendig ist. Es muss somit lediglich sichergestellt sein, dass das Identifikationsmerkmal auf dem zu identifizierenden Produkt bzw. Material von der Sensoreinheit erfasst wird, damit eine Signalübertragung auf die Auswerteeinheit zur weiteren Auswertung gegeben ist.

Anmeldungsgemäß wird somit erreicht, dass die Prüfung des Pfandschutzes und die Decodierung der Identifikatiosnummer in einem einzigen Schritt erfolgen kann. Verfahrenstechnisch hat es sich anmeldungsgemäß als besonders vorteilhaft erwiesen, wenn das zu identifizierende Produkt lediglich so zu positionieren ist, dass der Boden des Produktes abgefragt wird. Dies ist insbesondere dann von Vorteil, wenn das Produkt eine zylinderförmige Ausgestaltung hat.

Wird darüberhinaus gemäß dem anmeldungsgemäßen Verfahren das Bestrahlen des Identifikationsmerkmals mit Licht vorgenommen, dessen Wellenlänge größer ist als die Wellenlänge des emittierenden Lichts, so kommen indirekt nur Eigenschaften des Identifikationsmerkmales in Frage, die diesen physikalischen Effekt aufweisen. Mit anderen Worten ausgedrückt bedeutet dies, dass eine Fälschung des Identifikationsmerkmals aufgrund der verfahrenstechnischen Nachprüfung äußerst schwierig ist.

Weitere vorteilhafte Ausgestaltungen der vorliegenden Erfindung sind Gegenstand der Unteransprüche.

Weist das Beleuchtungsmodul zumindest einen Ring von Beleuchtungselementen auf, so kann eine gleichmäßige Ausleuchtung bzw. Beleuchtung des Identifikationsmerkmals bereitgestellt werden. Weist das Beleuchtungsmodul darüberhinaus eine Zentralöffnung für das Sichtfeld der Sensoreinheit auf, so ist eine kompakte Bauform und insbesondere der direkte Zugriff bzw. die direkte Abtastung auf das Identifikationsmerkmal möglich.

Wird für die Sensoreinheit ein optischer Filter vorgesehen, so können mit dem Filter Störsignale bzw. Hintergrundemissionen ausgeblendet werden, die den Erkennungsvorgang nachteilig beeinflussen können. Ist das Identifikationsmerkmal mit Lumineszenzfarbe aufgebracht worden, kann anhand der Emissionswellenlänge ebenso eine Codierung herbeigeführt werden, die für einen Nachahmer schwierig herbeizuführen wäre.

Wird darüberhinaus das Identifikationsmerkmal mit unterschiedlichen Lumineszenzfarben aufgebracht, so kann anhand der unterschiedlichen Emissionswellenlängen der Lumineszenzen erneut ein Muster produziert werden, dass gewisse Rückschlüsse auf den Pfandkreislauf und die Herkunftsart des Produktes erlaubt.

Ein weiteres Sicherheitsmerkmal ist vorteilhafterweise darin zu sehen, wenn das Identifikationsmerkmal ein Punkt-Strich-Code ist, dient somit speziell dem für die Identifikation und der Rückverfolgung entwickelte und der Öffentlichkeit nicht zugängliche Codierungsverfahren vor dem unrechtmäßigen Kopieren und Aufbringen eines Codes auf dem Produkt bzw. Material, da der Aufbau des Codes und das Decodierungsverfahren nur einem engen, begrenzten Personenkreis bekannt ist. Weist das Identifikationsmerkmal eine Rotationssymmetrie auf, so ist es beispielsweise möglich, nur anhand eines Teils des Identifikationsmerkmals die jeweilige Codierung feststellen zu können.

Dies ist ebenfalls möglich, wenn das Identifikationsmerkmal eine Rotationsinvarianz aufweist, die beispielsweise lediglich durch horizontal und vertikal spiegelverkehrtes Auftragen herbeigeführt wird.

Weitere vorteilhafte Ausgestaltungen sind Gegenstand der weiteren Unteransprüche.

Anhand der Zeichnungen soll eine vorteilhafte Ausgestaltung der Erfindung wiedergegeben sein.

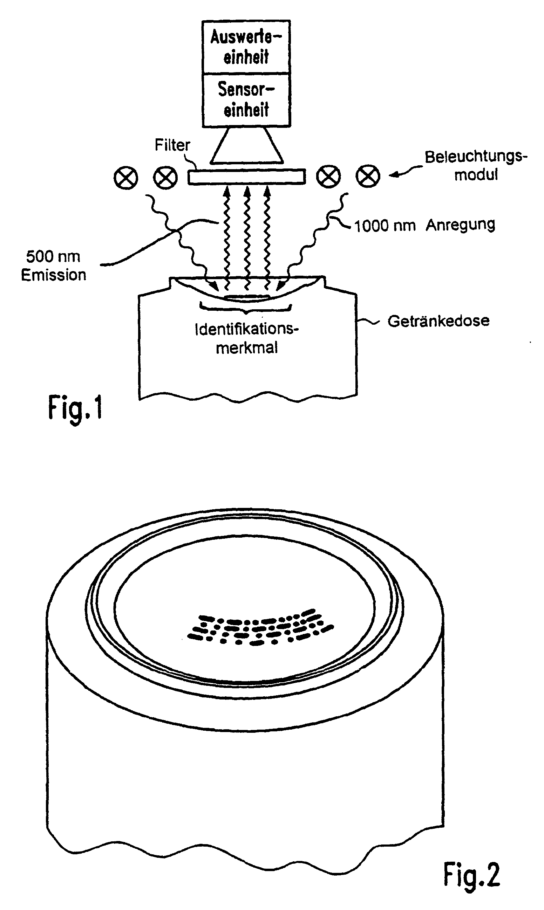

Wie in Figur 1 gezeigt ist, weist die anmeldungsgemäße Vorrichtung ein Beleuchtungsmodul 1, eine Sensoreinheit 3 und eine Auswerteeinheit 5 auf. Das zu bestrahlende Produkt 5 wird durch Licht des Beleuchtungsmoduls 1 bestrahlt, wobei das emittierende Licht über einen Filter 9 von der Sensoreinheit in Form einer herkömmlichen Kamera aufgenommen wird. Das zu identifizierende Produkt 7 ist in vorliegender Zeichnung in Überkopflage dargestellt, so dass die Beleuchtung des Bodens des Produktes, in diesem Fall einer herkömmlichen Getränkedose 11 beleuchtet wird. An dieser Stelle soll nochmals darauf hingewiesen werden, dass das Licht der Beleuchtungsmodule beispielsweise im Bereich von 1000 nm auf das Identifikationsmerkmal gestrahlt wird und dort aufgrund der besonderen Eigenschaft der Lumineszenzfarbe ein Emissionslicht beispielsweise von 500 nm abstrahlt. Ein derartiges Anregungs- und Emissionsverhalten der Lumineszenzfarbe ist somit besonders für die Codierverfahren geeignet, da derartige Lumineszenzbestandteile schwer im Handel erhältlich sind.

In Figur 2 ist beispielhaft ein Identifikationsmerkmal in Form eines Codes wiedergegeben, der als Punkt-Strich-Code ausgestaltet und auf dem Boden einer Getränkedose positioniert bzw. aufgebracht ist. Anhand der jeweiligen Symmetrie ist erkennbar, dass nur ein Teil des Identifikationsmerkmals bereits die Codierungsinformation beinhalten kann und somit ein Fehlen von Punkten bzw. Strichen in einem der Sektoren ausgeglichen sein kann.

Ein weiterer Vorteil des Punkt-Strich-Codes ist es, dass das Aufbringen eines derartigen Codes mit herkömmlichen Düsenstrahldrucker erfolgen kann. Wird dieser Code darüberhinaus transparent aufgebracht, so ist es für einen Unbeteiligten schwierig zu erkennen, ob das Produkt erfasst ist oder nicht. Es soll an dieser Stelle hervorgehoben werden, dass gemäß dem vorliegenden Anmeldungsgegenstand eine der Öffentlichkeit nicht zugängliche Farbe als Lumineszenzfarbe eingesetzt werden kann, deren Besonderheit darin liegt, dass die Anregung der Luminoforen (Farbpigmente) in einem höheren Wellenlängenbereich erfolgt als der Wellenlänge des emittierenden Lichts. Ferner ist der Farbstoff beispielsweise so beschaffen, dass er bei Tageslicht bzw. bei der Beleuchtung mit einer multispektralen Lichtquelle für das menschliche Auge, d.h. für den sichtbaren Spektralbereich unsichtbar ist. Wird die Kamera ferner mit einem schmalbandigen optischen Filter ausgestattet, der ausschließlich Licht für das emittierende Licht der Lumineszenzfarben durchlässig ist, so kann die Überprüfung exakter vorgenommen werden. Die Sensoreinheit in Form einer K amera i st m it der A uswerteinheit u nd E rkennungsmittel verbunden, die d as Kamerabild auswertet und damit den Code decodiert. Über Echtheit der Lumineszenzfarbe sowie einer korrekten Codierung, d.h. einem Code, der der Codierungsvorschrift entspricht, wird das Material in den Pfandkreislauf zurückgeführt. Um ein unbefugtes Kopieren des Codes zu verhindern, wird für die Codierung das anmeldungsgemäße Punkt-Strich-Code-Verfahren eingesetzt.

## Patentansprüche

1. Vorrichtung zum Erkennen eines Identifikationsmerkmals, insbesondere Codierungsmerkmals, auf einem zu identifizierenden Produkt, welche zumindest ein Beleuchtungsmodul, eine Sensoreinheit und eine Auswerteeinheit aufweist,
**dadurch gekennzeichnet, dass**
die Auswerteinheit ein Erkennungsmittel aufweist, das die mit der Sensoreinheit registrierte Darstellung des Identifikationsmerkmals rotationsunabhängig erfasst.

2. Vorrichtung nach Anspruch 1, wobei das Beleuchtungsmodul aus zumindest einem Ring von Beleuchtungselementen, vorzugsweise LED und/oder Laserdioden, besteht.

3. Vorrichtung nach einem der Ansprüche 1 oder 2, wobei das Beleuchtungsmodul eine Zentralöffnung für das Sichtfeld der Sensoreinheit aufweist.

4. Vorrichtung nach einem der Ansprüche 1 bis 3, wobei vor die Sensoreinheit ein optischer Filter, vorzugsweise Schmalbandfilter, vorgesehen ist.

5. Vorrichtung nach einem der Ansprüche 1 bis 4, wobei das Identifikationsmerkmal mit Lumineszenzfarbe, welches vorzugsweise im sichtbaren Spektralbereich transparent ist, aufgebracht ist.

6. Vorrichtung nach einem der Ansprüche 1 bis 5, wobei das Identifikationsmerkmal mit unterschiedlichen Lumineszenzfarben aufgebracht ist.

7. Vorrichtung nach einem der Ansprüche 1 bis 6, wobei das Identifikationsmerkmal ein Punkt-Strich-Code ist.

8. Vorrichtung nach einem der Ansprüche 1 bis 7, wobei das Identifikationsmerkmal eine Rotationssymmetrie aufweist.

9. Vorrichtung nach einem der Ansprüche 1 bis 7, wobei das Identifikationsmerkmal eine Rotationsinvarianz aufweist.

10. Vorrichtung nach einem der Ansprüche 1 bis 9, wobei das Identifikationsmerkmal auf den Boden des Produktes positioniert ist.

11. Verfahren zum Erkennen eines Identifikationsmerkmals, insbesondere Codierungsmerkmals, auf einem zu identifizierenden Produkt, insbesondere zur Verwendung in einer Vorrichtung nach einem der Ansprüche 1 bis 10, welches die Schritte aufweist:
a) Bereitstellen zumindest eines Beleuchtungsmoduls, einer Sensoreinheit und einer Auswerteeinheit
b) Bereitstellen des Produktes, bei dem der Boden des Produktes das Identifikationsmerkmal aufweist
c) Positionieren des Produktes, so dass der Boden des Produktes von der Sensoreinheit erfasst wird
d) Bestrahlen des Identifikationsmerkmals mit Licht, dessen Wellenlänge größer ist als die Wellenlänge des emittierenden Lichts.
e) Auswerten des mit der Sensoreinheit erfassten, emittierenden Lichts in der Auswerteinheit

12. Verfahren nach Anspruch 11, wobei das Identifikationsmerkmal mit Lumineszenzfarbe, welches vorzugsweise im sichtbaren Spektralbereich transparent ist, aufgebracht ist.

13. Verfahren nach einem der Ansprüche 11 oder 12, wobei das Identifikationsmerkmal mit unterschiedlichen Lumineszenzfarben aufgebracht ist.

14. Verfahren nach einem der Ansprüche 11 bis 13, wobei das Identifikationsmerkmal ein Punkt-Strich-Code ist.

15. Verfahren nach einem der Ansprüche 11 bis 14, wobei das Identifikationsmerkmal eine Rotationssymmetrie aufweist.

16. Verfahren nach einem der Ansprüche 11 bis 15, wobei das Identifikationsmerkmal eine Rotationsinvarianz aufweist.

17. Verfahren nach einem der Ansprüche 11 bis 16, wobei das Identifikationsmerkmal mit monochromatischem Licht bestrahlt wird.

18. Identifikationsprodukt zur Verwendung in der Vorrichtung nach einem der Ansprüche 1 bis 10 und insbesondere zur Durchführung des Verfahrens nach einem der Ansprüche 11 bis 16.
